(19) Europäisches Patentamt
European Patent Office
Office européen des brevets

(11) **EP 4 066 204 B1**

(12) **FASCICULE DE BREVET EUROPEEN**

(45) Date de publication et mention de la délivrance du brevet:
**25.06.2025 Bulletin 2025/26**

(21) Numéro de dépôt: **20820504.7**

(22) Date de dépôt: **24.11.2020**

(51) Classification Internationale des Brevets (IPC):
***G06T 5/73*** *(2024.01)*

(52) Classification Coopérative des Brevets (CPC):
**G06T 5/73;** G06T 2207/10048; G06T 2207/20024;
G06T 2207/30252

(86) Numéro de dépôt international:
**PCT/FR2020/052155**

(87) Numéro de publication internationale:
**WO 2021/105604 (03.06.2021 Gazette 2021/22)**

(54) **PROCÉDÉ ET DISPOSITIF DE TRAITEMENT D'IMAGES**

VERFAHREN UND VORRICHTUNG ZUR VERARBEITUNG VON BILDERN

METHOD AND DEVICE FOR PROCESSING IMAGES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.11.2019 FR 1913539**

(43) Date de publication de la demande:
**05.10.2022 Bulletin 2022/40**

(73) Titulaire: **Université Gustave Eiffel
77454 Marne-la-Vallée, Cedex 2 (FR)**

(72) Inventeurs:
• **FOURT, Olivier
75011 PARIS (FR)**
• **TAREL, Jean-Philippe
92140 CLAMART (FR)**

(74) Mandataire: **Cabinet Beau de Loménie
103, rue de Grenelle
75340 Paris Cedex 07 (FR)**

(56) Documents cités:
CN-A- 1 946 143          CN-B- 105 512 623
US-A1- 2015 371 373

**EP 4 066 204 B1**

**Description**

Domaine Technique

L'invention concerne le domaine du traitement d'images et plus précisément, le traitement d'images obtenues par caméra infra-rouge afin d'améliorer la visibilité des objets identifiables dans les images.

Technique antérieure

De nombreuses applications nécessitent de déterminer quels sont les objets présents dans une scène, ou à un emplacement déterminé. Par exemple, le pilotage d'un véhicule autonome nécessite d'identifier de manière sûre, en temps réel, quels sont les objets autour du véhicule, et notamment ceux qui sont éventuellement sur la chaussée devant le véhicule.

De manière connue en soi, on utilise des caméras, couplées à des méthodes d'identification d'objet, pour identifier les objets identifiables dans les images acquises par les caméras. Ces caméras opèrent dans différents spectres (plages de longueurs d'onde), comme par exemple le spectre visible, ou encore le spectre infra-rouge.

La difficulté de cette opération est accrue en présence de brouillard ou de précipitations. En effet, en présence de brouillard et plus généralement de mauvaises conditions météorologiques, la visibilité des objets observés avec une caméra infrarouge thermique (LWIR) est dégradée.

Le document CN1946143 divulgue un procédé de suppression du bruit de bande (lignes sombres et claires).

Les documents US2015371373 et CN105512623 divulguent des méthodes pour supprimer du brouillard des images acquises par une caméra montée sur un véhicule.

Exposé de l'invention

Un premier objectif de l'invention est de proposer un procédé permettant, à partir d'images acquises par temps de brouillard ou pendant des précipitations, d'obtenir des images améliorées dans lesquelles la visibilité des objets présents dans l'image est accrue, et ainsi la détection d'objets dans ces images est facilitée.

Cet objectif est atteint grâce à un procédé de traitement d'image comportant les étapes suivantes :

a) on acquiert une image initiale A constituée de pixels ;

c1) à l'aide d'au moins un ordinateur, pour chaque valeur d'un indice j dans une plage de lignes allant de N1 à N2 de l'image initiale A, on détermine un facteur F1(j) tel que :

$$E_{moyen}\,(G1(j)\,;\,I_{A,i,j}\,*\,F1(j)\,;\,I_{A,i,j+s}) \leq\ E_{moyen}\,(G1(j)\,;\,I_{A,i,j}\,;\,I_{A,i,j+s})$$

où

G1(j) est un premier groupe de colonnes de la ligne j considérée ;

$I_{A,i,j}$ est une intensité d'un pixel de l'image initiale A situé sur la colonne i et la ligne j ;

$E_{moyen}\,(G1(j)\,;\,x(i,j)\,;\,y(i,j))$ est l'écart moyen en valeur absolue entre des valeurs x(i,j) et y(i,j), pour les valeurs de i du groupe de colonnes G1(j) ;

s=+1 ou -1 ; et

d1) on calcule une première image améliorée (B1) dans laquelle chaque ligne Lj de ladite plage de lignes allant de N1 à N2, est remplacée par une ligne L'j obtenue en multipliant chaque pixel de la ligne Lj par un coefficient multiplicateur (M1(j)) égal au produit des facteurs F1(k), pour k allant de N1 à j.

Grâce à cette opération, pour chaque ligne Lj de la plage de lignes P, on détermine un facteur F1(j) tel que, si l'on multipliait chaque pixel de la ligne Lj par ce facteur F1(j), on obtiendrait une ligne L'j telle que l'écart moyen entre des intensités des pixels de la ligne L'j situés dans un premier groupe de colonnes et des intensités de pixels correspondants de la ligne Lj+s est inférieur (en valeur absolue) à l'écart moyen entre des intensités des pixels de la ligne Lj situés dans le premier groupe de colonnes et les intensités des pixels correspondants de la ligne Lj+s (c'est-à-dire la ligne immédia-

2

tement supérieure ou inférieure à la ligne j).

Dans la définition du procédé ci-dessus, un pixel correspondant à un pixel cité précédemment est un pixel situé dans la même colonne que le pixel cité précédemment.

Dans ce procédé, de préférence l'image initiale est une image infra-rouge, notamment une image dans l'infra-rouge longues ondes (LWIR). L'image initiale est dans ce cas une image acquise à l'aide d'une caméra infra-rouge longues ondes.

En effet, il est apparu qu'en prenant en compte un modèle physique de la dégradation d'images, notamment d'images acquises dans la bande LWIR, il est possible de manière simple, conformément au procédé défini ci-dessus, d'améliorer par un traitement informatique simple la qualité des images et ainsi d'accroître la visibilité des objets présents dans les images.

Le procédé défini ci-dessus est fondé sur les hypothèses suivantes.

Il est supposé que l'intensité moyenne du rayonnement émis par un point de la scène est sensiblement constante quelle que soit la position de ce point dans la scène, qu'il soit proche ou loin de la caméra.

Par conséquent, il est donc supposé que la présence de brouillard entraîne une dégradation des images qui est proportionnelle à la distance entre la caméra et le point observé.

(Dans le texte qui suit, pour simplifier il ne sera fait référence qu'au « brouillard », mais ce terme devra être interprété de manière large comme couvrant tout phénomène atmosphérique susceptible de perturber l'acquisition d'images d'une scène en perturbant l'atmosphère entre la caméra et la scène, comme notamment le brouillard, la pluie, la bruine, la neige, la grêle, la poussière, etc.).

Le principe de l'invention consiste donc à détecter une perte d'intensité des pixels de l'image attribuable au brouillard, et à compenser cette perte d'intensité de manière à compenser la dégradation causée par le brouillard.

Pour cela, l'invention repose également sur l'hypothèse qu'au moment de l'acquisition de l'image, la caméra est orientée de telle sorte que l'axe transverse de la caméra (parallèle aux lignes de l'image acquise) est orienté suivant une direction sensiblement parallèle au sol, - en général horizontale -.

Dans ces conditions, sur une même ligne de l'image, les points de la scène représentés par les différents pixels sont sensiblement à la même distance par rapport à la caméra.

La géométrie de la scène conduit donc globalement des points situés à une même distance de la caméra à se trouver sensiblement dans une même ligne de l'image. Il s'ensuit qu'une perte d'intensité lumineuse entre deux lignes consécutives de l'image peut être identifiée comme étant une perte d'intensité des pixels de l'image attribuable au brouillard.

Avantageusement, le procédé proposé ci-dessus permet de manière simple de quantifier cette perte d'intensité et de la compenser, améliorant ainsi la qualité de l'image et la visibilité des objets présents dans l'image.

Ce procédé peut être intégré à la caméra ou s'appliquer en post-traitement sur les images capturées par la caméra. Le procédé proposé fonctionne de jour comme de nuit. Il peut être utilisé pour améliorer la visualisation de toute scène capturée en infrarouge, par exemple la scène devant un véhicule, ou encore une scène filmée par un système de télésurveillance.

Dans le procédé défini ci-dessus, le calcul du coefficient F1 est généralement fait en prenant en compte, pour une ligne Lj donnée, l'ensemble des pixels de la ligne. Le 'premier groupe de colonnes' (noté selon le contexte G1 ou G1(j)) contient alors pour la ligne Lj considérée l'ensemble des colonnes de l'image (le premier groupe de colonnes G1(j) est déterminé, ou du moins peut être déterminé séparément, pour chaque ligne Lj de l'image).

Dans la définition ci-dessus, les écarts sont calculés en valeur absolue.

La fonction 'Ecart_moyen' est une fonction qui, appliquée à deux grandeurs $x(i,j)$ et $y(i,j)$ définies pour chaque valeur $(i,j)$, i prenant successivement toutes les valeurs des colonnes du groupe de colonnes G1(j), fournit une moyenne de l'écart en valeur absolue entre les grandeurs $x(i,j)$ et $y(i,j)$. Toute fonction de moyenne peut être utilisée pour calculer l'écart moyen, par exemple une moyenne arithmétique, quadratique, géométrique, etc.

Ainsi par exemple, l'écart moyen entre les intensités des pixels de deux lignes successives dans un groupe de colonnes peut être calculé comme une moyenne des différences (en valeur absolue) des valeurs d'intensité des deux pixels de cette colonne appartenant respectivement à une ligne et à la ligne suivante, en utilisant la formule suivante :

$$E_{moyen}\,(G1(j)\,;\,I_{A,i,j}\,;\,I_{A,i,j+1}\,) = Moyenne\,_{G1(j)}\,|\,I_{A,i,j} - I_{A,i,j+1}\,|$$

où $Moyenne_{G1(j)}\,(x(i,j))$ désigne une fonction de moyenne de la fonction $x(i,j)$, pour l'ensemble des valeurs de colonne i du groupe G1(j).

Par conséquent, le traitement réalisé en multipliant chacun des pixels de la ligne Lj par le facteur F permet de réduire l'écart d'intensité entre les lignes Lj et Lj+s. Grâce à cela, l'effet du brouillard au niveau des pixels traités est réduit, et la visibilité des objets représentés par ces pixels est accrue.

Le facteur F1 peut être déterminé de différentes manières.

Le procédé est appliqué de préférence soit sur toute une partie inférieure de l'image (notamment une partie située sous l'horizon), soit sur la totalité des lignes de l'image.

Dans un mode de réalisation préférentiel, à l'étape c1), pour une ligne j, le facteur F1(j) est déterminé comme étant la valeur du paramètre F pour laquelle la valeur de la fonctionnelle K suivante est minimale :

$$K = \sum_{G1(j)} g\big(I_{A,i,j+s} - F * I_{A,i,j}\big)$$

où g est une fonction strictement croissante, et la somme est calculée pour l'ensemble des colonnes i du groupe G1(j). La fonction g peut notamment être une norme. La valeur F1 ainsi obtenue minimise l'écart global (il dépend de la fonction g choisie) entre les pixels de la ligne $L_{j+s}$ et ceux de la ligne L'j. La somme sur i dans l'expression ci-dessus porte sur l'ensemble des colonnes i de l'image.

Par exemple, à l'étape c1), pour une ligne j, le facteur F1(j) peut être déterminé comme étant la valeur du paramètre F pour laquelle la valeur de la fonctionnelle K suivante est minimale:

$$K = \sum_{G1(j)} \big(\lvert I_{A,i,j+s} - F * I_{A,i,j} \rvert\big)^p$$

où p est un nombre positif.

Dans un mode de réalisation, à l'étape c1), pour une ligne j, le facteur F1(j) est déterminé comme étant égal au ratio entre l'intensité moyenne des pixels de la ligne Lj et l'intensité moyenne des pixels de la ligne Lj+s.

Dans la détermination de ce ratio, l'intensité moyenne est une fonction de moyenne ; l'intensité moyenne des pixels d'une ligne est donc une moyenne de l'intensité des pixels de la ligne. Toute fonction de moyenne peut être utilisée pour réaliser ce calcul : une moyenne arithmétique, quadratique, etc. ; une fonction de médiane, etc.

Dans ce mode de réalisation, la moyenne des intensités de la ligne L'j obtenue en multipliant chaque pixel de la ligne j par le facteur F1(j) est donc sensiblement égale à celle de la ligne $L_{j+s}$ :

$$\text{Moyenne}_{G1(j)} \left( I_{A,i,j} * F1(j) \right) = \text{Moyenne} \left( I_{A,i,j+s} \right)$$

Le procédé permet ainsi d'homogénéiser les intensités moyennes entre différentes lignes de l'image, et éventuellement sur l'ensemble des lignes de l'image.

La précision du procédé peut être augmentée en y intégrant en outre les étapes suivantes :

c2) pour chaque e valeur de l'indice j dans la plage de lignes allant de N1 à N2 de l'image initiale A, à l'aide d'au moins un ordinateur :

on détermine un facteur F2(j) tel que :

$$E_{\text{moyen}} \left( G2(j) ; I_{A,i,j} * F2(j) ; I_{A,i,j-s} \right) \leq E_{\text{moyen}} \left( G2(j) ; I_{A,i,j} ; I_{A,i,j-s} \right)$$

où G2(j) est un deuxième groupe de colonnes de la ligne j considérée ; et

d2) on calcule une deuxième image améliorée dans laquelle chaque ligne Lj de ladite plage de lignes allant de N1 à N2 est remplacée par une ligne L"j obtenue en multipliant chaque pixel de la ligne Lj par un coefficient multiplicateur (M2(j)) égal au produit des facteurs F2(k), pour k allant de j à N2; et

e) on calcule une image améliorée moyenne égale à une moyenne des première et deuxième image améliorée .

En pratique, le calcul des coefficients F1 et/ou F2 à appliquer aux pixels d'une ligne est généralement effectué, pour chacune des lignes Lj, en prenant en compte l'ensemble des colonnes de l'image. Dans ce cas, le premier groupe de colonnes contient les indices de toutes les colonnes de l'image initiale A.

Cependant, il peut être préférable de calculer les coefficients F1 et/ou F2 en prenant en compte non pas l'ensemble des pixels d'une ligne Lj considérée, mais en prenant en compte seulement une partie d'entre eux. Le premier ou deuxième groupe de colonnes définit alors un nombre restreint de pixels qui doivent être pris en compte pour le calcul des coefficients F1 et/ou F2.

Il convient de sélectionner ainsi les pixels à prendre en compte pour le calcul du coefficient F1 notamment lorsque pour certains pixels considérés dans une ligne Lj, les pixels correspondants dans la ligne de référence Lj+s ou Lj-s à partir de laquelle est calculé le facteur F1 ou F2 ne représentent pas du tout le même objet ou la même zone que les pixels considérés de la ligne Lj. Ces pixels peuvent être appelés 'pixels de bord', car ils représentent dans ce cas le bord ou la limite d'un objet ou d'une zone. Dans ce cas, il est préférable de ne pas prendre en compte les pixels de bord pour le calcul des coefficients F1 et/ou F2. On détermine alors le premier groupe de colonnes de telle sorte qu'il ne contienne pas les colonnes dans lesquelles se trouvent les pixels de bord.

Les pixels de bord peuvent être détectés en repérant le fait que l'écart d'intensité entre un pixel de la ligne Lj et le pixel correspondant de la ligne Lj+s ou Lj-s selon le cas est relativement grand, et en tout cas supérieur à l'écart qu'il devrait avoir si cet écart était seulement dû à la présence de brouillard. Lorsque cette situation est détectée, le pixel considéré peut être identifié comme étant un pixel de bord, qui ne doit pas être pris en compte pour le calcul du facteur F1 ou F2.

Pour mettre en œuvre ce principe, dans un mode de réalisation, le procédé comporte en outre l'étape suivante, pour au moins une ligne Lj :

b1) pour chacun des pixels de ladite au moins une ligne $L_j$, on évalue un écart ($E_{A,h,j}$) entre une intensité $I_{A,h,j}$ d'un pixel d'une colonne h considérée sur la ligne Lj et une intensité $I_{A,h,j+s}$ d'un pixel correspondant dans la colonne h sur la ligne $L_{j+s}$ :

$$E_{A,h,j} = \mid I_{A,h,j} - I_{A,h,j+s} \mid \ ; \ et$$

et

à l'étape d1, le premier groupe de colonnes à prendre en compte pour la ligne Lj est déterminé comme étant l'ensemble des indices de colonne h pour lesquels l'écart $E_{A,h,j}$ est inférieur à une valeur prédéterminée.

Enfin, à l'issue des différentes étapes présentées ci-dessus, dans un mode de réalisation le procédé comporte en outre l'étape suivante :

f) on calcule une image améliorée finale en appliquant un traitement de compression de la dynamique à une image parmi la première ou la deuxième image améliorée, ou à l'image améliorée moyenne. Cette opération est appelée en Anglais 'tone-mapping'.

Par ailleurs, après l'acquisition de l'image initiale à l'étape a) et avant les étapes b1 et/ou b2, on peut prévoir un traitement de débruitage de l'image initiale.

Dans un mode particulier de réalisation, les différentes étapes du procédé de traitement d'images sont déterminées par des instructions de programmes d'ordinateurs.

En conséquence, l'invention vise aussi un programme d'ordinateur sur un support d'informations, ce programme étant susceptible d'être mis en œuvre dans un ordinateur, ce programme comportant des portions/moyens/instructions de code de programme pour l'exécution des étapes du procédé de traitement d'images défini précédemment lorsque ledit programme est exécuté sur un ordinateur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable. Le programme selon l'invention peut être en particulier téléchargé sur un réseau de type Internet.

L'invention vise aussi un support d'informations lisible par un ordinateur sur lequel est enregistré un programme d'ordinateur tel que défini ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur. Alternativement, le support d'informations peut être un circuit intégré dans lequel le programme est incorporé, le circuit étant adapté pour exécuter ou pour être utilisé dans l'exécution du procédé de traitement d'images.

Un deuxième objectif de l'invention est de proposer un dispositif permettant, à partir d'images acquises par temps de brouillard ou pendant des précipitations, d'obtenir des images améliorées dans lesquelles la visibilité des objets présents dans l'image est accrue, et ainsi la détection d'objets dans ces images est facilitée.

Cet objectif est atteint grâce à un dispositif de traitement d'images, le dispositif comportant

a) un module d'acquisition d'image initiale, configuré pour acquérir une image initiale A constituée de pixels ;

c1) un module de détermination de facteur correctif F1, configuré, pour chaque valeur d'un indice j dans une plage de lignes allant de N1 à N2 de l'image initiale A, pour déterminer un facteur F1(j) tel que :

$$E_{moyen}\,(G1(j)\,;\,I_{A,i,j}\,*\,F1(j)\,;\,I_{A,i,j+s}) \leq E_{moyen}\,(G1(j)\,;\,I_{A,i,j}\,;\,I_{A,i,j+s})$$

où G1(j) est un premier groupe de colonnes de la ligne j considérée ;

$I_{A,i,j}$ est une intensité d'un pixel de l'image initiale A situé sur la colonne i et la ligne j ;

$E_{moyen}\,(G1(j)\,;\,x(i,j)\,;\,y(i,j))$ est l'écart moyen en valeur absolue entre les valeurs x(i,j) et y(i,j), pour les valeurs de i du groupe de colonnes G1(j) ;

s=+1 ou -1 ; et

d1) un module de calcul de première image améliorée (B1) configuré pour calculer une première image améliorée, dans laquelle chaque ligne Lj de ladite plage d'indices j variant de N1 à N2 est remplacée par une ligne L'j obtenue en multipliant chaque pixel de la ligne Lj par un coefficient multiplicateur égal au produit des facteurs F1(k), pour k allant de N1 à j.

Ce dispositif est ainsi configuré pour la mise en œuvre du procédé défini précédemment, ainsi que ses différents perfectionnements.

Ainsi dans un mode de réalisation, le module de détermination de facteur correctif F1 est configuré pour obtenir le facteur F1 comme étant la valeur du paramètre F pour laquelle la valeur de la fonctionnelle K suivante est minimale :

$$K = \sum_{G1(j)} g\big(I_{A,i,j+s} - F * I_{A,i,j}\big)$$

où g est une fonction strictement croissante, notamment une norme, et la somme est calculée pour l'ensemble des colonnes i du groupe G1(j).

En particulier, dans un mode de réalisation, le module de détermination de facteur correctif F1 est configuré pour obtenir le facteur F1 comme étant la valeur du paramètre F pour laquelle la valeur de la fonctionnelle K suivante est minimale :

$$K = \sum_{G1(j)} \big(|\,I_{A,i,j+s} - F * I_{A,i,j}\,|\big)^{p}$$

où p est un nombre positif.

Dans un mode de réalisation, le module de détermination de facteur correctif F1 est configuré pour déterminer le facteur F1 comme étant égal au ratio entre l'intensité moyenne des pixels de la ligne Lj et l'intensité moyenne des pixels de la ligne Lj+s (l'intensité moyenne des pixels d'une ligne étant une moyenne de l'intensité des pixels de la ligne).

La moyenne des intensités de la ligne L'j obtenue en multipliant chaque pixel de la ligne j par le facteur F1(j) est égale à celle de la ligne $L_{j+s}$ :

$$Moyenne_{G1(j)}\,(\,I_{A,i,j} * F1(j)) = Moyenne\,(\,I_{A,i,j+s})$$

Par extension, la présente divulgation concerne également un système d'acquisition d'images comprenant au moins une caméra infra-rouge, notamment une caméra infra-rouge configurée pour acquérir des images dans la bande de fréquence LWIR, et un dispositif de traitement d'images tel que défini précédemment. La présente divulgation concerne enfin un 15 robot ou véhicule comprenant un système d'acquisition d'images tel que défini précédemment.

Brève description des dessins

L'invention sera bien comprise et ses avantages apparaîtront mieux à la lecture de la description détaillée qui suit, de modes de réalisation représentés à titre d'exemples non limitatifs. La description se réfère aux dessins annexés, sur lesquels :

[Fig. 1] La figure 1 est une vue schématique d'un dispositif d'acquisition d'image conforme à la présente divulgation ;

[Fig. 2] La figure 2 est une représentation schématique d'une image traitée par un procédé de traitement d'image conforme à la présente divulgation ; et

[Fig. 3] La figure 3 est un diagramme par blocs représentant un procédé de traitement d'image conforme à la présente divulgation.

Description des modes de réalisation

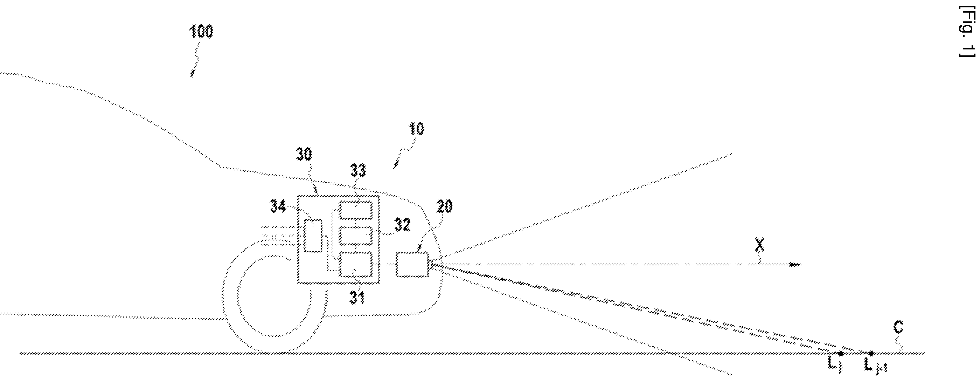

En faisant référence à la figure 1, un véhicule 100 va maintenant être décrit. Le véhicule 100 (en l'occurrence, une voiture individuelle) est équipé d'un système d'acquisition d'images 10 conforme à la présente divulgation.

Le système d'acquisition d'images 10 comporte une caméra infra-rouge 20, montée à l'avant du véhicule 100, et un calculateur 30. Le calculateur 30 constitue un dispositif de traitement d'images au sens de la présente divulgation.

Le calculateur 30 a l'architecture matérielle d'un ordinateur, comme illustré schématiquement dans la figure 1.

Il comporte notamment un processeur 31, une mémoire morte 32, une mémoire vive 33 et des moyens de communication 34 pour communiquer avec le reste du véhicule 100 et/ou avec des réseaux de communication extérieurs au véhicule.

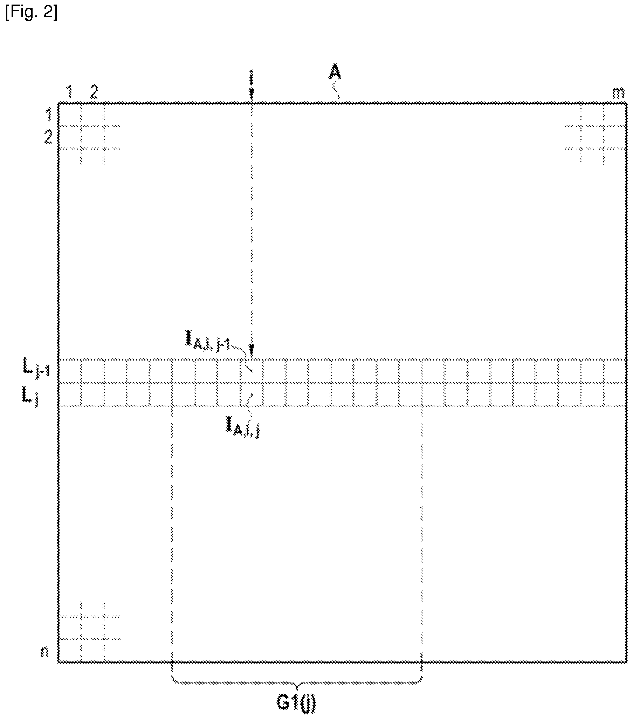

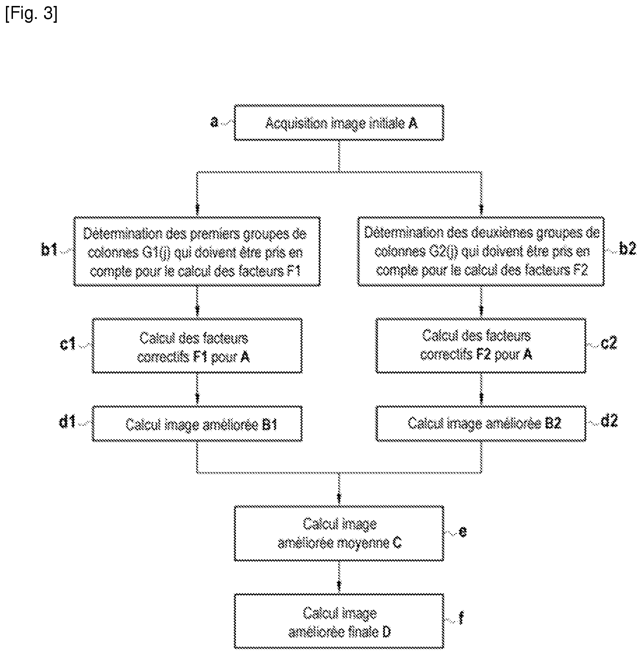

La mémoire morte 32 du calculateur 30 constitue un support d'enregistrement conforme à la divulgation, lisible par le processeur 31 et sur lequel est enregistré un programme d'ordinateur conforme à l'invention, comportant des instructions pour l'exécution des étapes du procédé de traitement d'images selon la présente divulgation qui sera décrit plus loin en relation avec les figures 2 et 3. Ce programme d'ordinateur définit, de façon équivalente, des modules fonctionnels du dispositif de traitement d'images 10, à savoir un module d'acquisition d'image initiale, un module de détermination de facteur correctif F1, et un module de calcul de première image améliorée.

La caméra 20 est dirigée horizontalement suivant un axe X situé dans le plan médian du véhicule et permet d'acquérir des images représentant la partie de la chaussée C située devant le véhicule 100.

Dans chaque image acquise, les lignes inférieures de l'image représentent les parties de la scène qui sont les plus proches du véhicule 100. En fait, plus une ligne est proche de la ligne inférieure de l'image, plus elle représente des points de la scène proches du véhicule. Ainsi la ligne Lj+1 correspond à des points plus proches de la caméra 10 que les points Lj.

Il s'ensuit que par temps de brouillard, comme la perte de visibilité causée par le brouillard est globalement proportionnelle à une fonction croissante de la distance entre la caméra et le point observé, les objets sur les lignes de l'image sont donc d'autant plus visibles qu'ils sont situés en bas de l'image.

La mise en œuvre du procédé selon la présente divulgation permet avantageusement de prendre en compte cette propriété et de compenser la perte de visibilité dans l'image qui résulte de la présence du brouillard.

Un exemple de mise en œuvre d'un procédé de traitement d'image conforme à la présente divulgation et mis en œuvre par le calculateur 30 du système d'acquisition d'images 10 va maintenant être décrit en faisant référence aux figures 2 et 3.

a1) Acquisition de l'image initiale

On commence par acquérir une image initiale A. Dans l'exemple présenté, cette acquisition est faite habituellement en acquérant l'image fournie en sortie par la caméra 20. Cependant de manière plus générale, au sens de la présente divulgation, l'acquisition peut être faite en lisant l'image dans un fichier informatique, en recevant l'image via une connexion à distance, en calculant l'image à partir d'autres données, ou tout autre moyen.

Dans le cas présent, l'image A est acquise au moyen d'une caméra infra-rouge opérant dans la plage de fréquence 'longues ondes' de la bande infra-rouge (LWIR). Cette image comporte n lignes j et m colonnes i.

Un traitement de débruitage de l'image est appliqué à l'image initiale afin de réduire le bruit dans l'image.

Une série d'opérations sont alors réalisées en parallèle.

Dans cet exemple de mise en œuvre, on se place dans le cas où s=+1, N1=1 et N2=n. La présente divulgation inclut aussi naturellement les cas où s=-1, N1>1 et/ou N2<n.

b1) Identification des premiers groupes G1(j) de colonnes à prendre en compte pour le calcul des facteurs F1

Pour l'image A, pour chacune des lignes Lj, et pour chaque colonne i, on réalise les opérations suivantes (sauf si celles-ci ne sont pas définies) pour déterminer le premier groupe de colonnes G1(j) :

a) on évalue l'écart (E A,i,j) entre l'intensité $I_{A,i,j-1}$ du pixel (i,j+s) (pixel de la colonne i et de la ligne j+s) et l'intensité $I_{A,i,j}$

du pixel (i,j) correspondant sur la ligne Lj :

$$E_{A,i,j} = |\ I_{A,i,j+s} - I_{A,i,j}\ |.$$

b) on intègre la colonne i considérée au premier groupe de colonnes G1(j) seulement si l'écart E A,i,j est inférieur à une valeur seuil Emax.

b2) Identification des deuxièmes groupes G2(j) de colonnes à prendre en compte pour le calcul des facteurs F2

Pour l'image A, pour chacune des lignes Lj, et pour chaque colonne i, on réalise les opérations suivantes (sauf si celles-ci ne sont pas définies) pour déterminer le deuxième groupe de colonnes G2(j) :

a) on évalue l'écart (E A,i,j) entre l'intensité I A,i,j-1 du pixel (i,j-s) (pixel de la colonne i et de la ligne j-s) et l'intensité I A,i,j du pixel (i,j) correspondant sur la ligne Lj :

$$E_{A,i,j} = |\ I A,i,j-s - I A,i,j\ |.$$

b) on intègre la colonne i considérée au deuxième groupe de colonnes G2(j) seulement si l'écart $E_{A,i,j}$ est inférieur à la valeur seuil Emax.

Selon la valeur de s, l'un des groupes G1(1) ou G2(1), et l'un des groupes G1(n) ou G2(n), ne sont pas définis par les calculs précédents.
On fixe donc de plus que ces groupes non définis par les calculs précédents sont égaux respectivement au même groupe de colonnes, mais respectivement de la deuxième ligne (G1(2) ou G2(2) selon le cas) et de l'avant-dernière ligne (G1(n-1) ou G2(n-1) selon le cas).

c1) et c2) Détermination des facteurs correctifs F1 et F2

On calcule alors les facteurs correctifs F1(j) et F2(j), j=1...n, pour chacune des lignes de l'image initiale A, de la manière suivante :
Les facteurs correctifs F1(n) et F2(1) respectivement pour la dernière ligne et pour la première ligne sont chacun égaux à 1.
Pour chacune des lignes Lj pour lesquelles F1 ou F2 n'a pas encore été déterminé, on calcule les facteurs correctifs F1(j) et F2(j) avec les formules :

$$F1(j) = \frac{\sum_i \left(I_{A,i,j} * I_{A,i,j+s}\right)}{\sum_i \left(I_{A,i,j} * I_{A,i,j}\right)} \quad \text{et} \quad F2(j) = \frac{\sum_i \left(I_{A,i,j} * I_{A,i,j-s}\right)}{\sum_i \left(I_{A,i,j} * I_{A,i,j}\right)}$$

Pour chaque ligne Lj, considérons maintenant la ligne L'j obtenue en multipliait chaque pixel de la ligne Lj par le facteur F1(j).
Les coefficients F1 sont calculés de telle sorte que pour chaque ligne Lj, l'écart moyen entre les intensités des pixels de la ligne L'j situés dans le premier groupe de colonnes et les intensités des pixels correspondants de la ligne Lj+s est inférieur à l'écart moyen entre les intensités des pixels de la ligne Lj situés dans le premier groupe de colonnes et les intensités des pixels correspondants de la ligne Lj+s.
La même propriété est obtenue pour les coefficients F2 (en remplaçant +s par -s).
Dans les expressions de F1(j) et de F2(j), on ne calcule les sommes ('Sigma' sur i) que pour les indices i des pixels du premier ou respectivement du deuxième groupe de colonnes (G1(j),G2(j)), c'est-à-dire seulement pour les pixels pour lesquels l'écart E A,i,j est inférieur à la valeur seuil Emax. Cette méthode conduit donc à ne pas prendre en considération dans le calcul des facteurs correctifs F1 et F2 les colonnes dans lesquelles il y a une discontinuité de valeur importante entre la ligne j et la ligne j+s (ou respectivement entre les lignes j et j-s). Cette méthode permet ainsi avantageusement de ne pas prendre en considération certaines informations non pertinentes, comme les écarts d'intensité entre un objet et un autre objet distinct de la scène observée, qui n'ont rien à voir avec une perte de qualité de l'image due au brouillard.
Remarques :

- les étapes b1) et b2) sont optionnelles. Si elles ne sont pas réalisées, les groupes G1 et G2 contiennent par défaut l'ensemble des colonnes de l'image A. Le calcul des facteurs correctifs F1 et F2 est alors réalisé en calculant les sommes ('Sigma' sur i) au numérateur et au dénominateur de l'équation ci-dessus pour toutes les valeurs de i, de la première à la dernière colonne.

- Dans cet exemple de mise en œuvre, les facteurs F1 et F2 sont calculés par la formule ci-dessus. Naturellement, toute autre des fonctions proposées précédemment pour mettre en œuvre le procédé selon la présente divulgation peut aussi être utilisée.

### d1) et d2) Calcul des images améliorées B1 et B2

Ensuite, lors d'une étape d1) pour l'image initiale A, on réalise les opérations suivantes pour calculer l'image améliorée B1 :
Calcul des coefficients M1 et M2 et des valeurs de pixels des images améliorées, pour une première ligne :
On initialise les coefficients multiplicateurs M1 et M2 pour une première ligne, soit respectivement :

M1, pour la ligne 1 : $M1(1) = F1(1)$ ; et

M2, pour la ligne n : $M2(n) = F2(n)$.

On calcule alors la valeur de chacun des pixels de la ligne 1 (j=1) de la première image améliorée, et de chacun des pixels de la dernière ligne (j=n) de la deuxième image améliorée, de la manière suivante :
Pour chaque valeur de i allant de 1 à m :

$$I_{B1,i,1} = M1(1) * I_{A,i,1} \text{ et } I_{B2,i,n} = M2(n) * I_{A,i,n}.$$

Calcul des coefficients M1,M2 et des valeurs de pixels des images améliorées, pour les autres lignes :
Première image améliorée : pour chaque valeur de j allant de 2 à n :

On calcule les coefficients multiplicateurs M1 pour la ligne j :

$$M1(j) = M1(j-1) * F1(j)$$

On calcule alors la valeur de chacun des pixels de la ligne j de la première image améliorée. Pour chaque valeur de i allant de 1 à m :

$$I_{B1,i,j} = M1(j) * I_{A,i,j}$$

Deuxième image améliorée : Pour chaque valeur de j allant de n-1 à 1 :

On calcule les coefficients multiplicateurs M2 pour la ligne j :

$$M2(j) = M2(j+1) * F2(j)$$

On calcule alors la valeur de chacun des pixels de la ligne j de la deuxième image améliorée. Pour chaque valeur de i allant de 1 à m :

$$I_{B2,i,j} = M2(j) * I_{A,i,j}$$

Grâce à ces opérations, on obtient des images améliorées B1 et B2 dont les lignes L"j présentent un écart moyen entre les intensités des pixels de la ligne L"j et les intensités des pixels de la ligne Lj+s et respectivement Lj-s qui est inférieur à l'écart moyen entre les intensités des pixels de la ligne Lj et les intensités des pixels de la ligne Lj+s et respectivement Lj-s. Grâce à cela, la visibilité des objets dans les images B1 et B2 est améliorée par rapport à leur visibilité dans les images A et Ainv.
Dans le mode de mise en œuvre ci-dessus, l'ensemble des lignes de l'image initiale est modifié par la transformation indiquée. Cependant, dans d'autres modes de mise en œuvre seule une partie des lignes de l'image, par exemple une plage de lignes dans un intervalle donnée, peut être modifiée.

e) Calcul de l'image améliorée moyenne C

On calcule alors une image améliorée moyenne C en faisant la moyenne des première et deuxième image améliorée B1 et B2 : chaque pixel (i,j) de l'image améliorée moyenne prend la valeur :

$$I_{C\,i,j} = \tfrac{1}{2}\left(I_{B1,i,j} + I_{B2,i,j}\right)$$

f) Calcul de l'image améliorée finale D

On calcule alors l'image améliorée finale D en appliquant un traitement de compression de la dynamique de l'image à l'image améliorée moyenne C.

Quoique la présente invention ait été décrite en se référant à des exemples de réalisation ou de mise en œuvre spécifiques, il est évident que des différentes modifications et changements peuvent être effectués sur ces exemples sans sortir de la portée générale de l'invention telle que définie par les revendications. En outre, des caractéristiques individuelles des différents modes de réalisation évoqués peuvent être combinées dans des modes de réalisation additionnels. Par exemple, alors que dans l'exemple présenté, le dispositif de traitement d'image (le calculateur 30) est intégré avec la caméra 20, de manière notamment à pouvoir produire des résultats en temps réel. Inversement, dans un autre mode de réalisation le dispositif de traitement d'image peut être indépendant de la caméra. Il peut s'agir d'un ordinateur, par exemple un ordinateur relié à internet, et apte à mettre en œuvre un programme conforme à la présente divulgation pour traiter des images et fournir en sortie des images dans lesquelles la visibilité des objets est améliorée. Par conséquent, la description et les dessins doivent être considérés dans un sens illustratif plutôt que restrictif.

**Revendications**

1. Procédé de traitement d'image comportant les étapes suivantes :

   a) on acquiert une image initiale (A) constituée de pixels ;
   c1) à l'aide d'au moins un ordinateur, pour chaque valeur d'un indice j dans une plage de lignes allant de N1 à N2 de l'image initiale (A), on détermine un facteur F1(j) comme étant la valeur du paramètre F pour laquelle la valeur de la fonctionnelle K suivante est minimale :

   $$K = \sum_{G1(j)} g\!\left(I_{A,i,j+s} - F * I_{A,i,j}\right)$$

   où
   G1(j) est un premier groupe de colonnes de la ligne j considérée ;
   g est une fonction strictement croissante, notamment une norme, et la somme est calculée pour l'ensemble des colonnes i du groupe G1(j) ;
   $I_{A,i,j}$ est une intensité d'un pixel de l'image initiale (A) situé sur la colonne i et la ligne j ;
   s=+1 ou -1 ; et
   d1) on calcule une première image améliorée (B1) dans laquelle chaque ligne Lj de ladite plage de lignes allant de N1 à N2, est remplacée par une ligne L'j obtenue en multipliant chaque pixel de la ligne Lj par un coefficient multiplicateur (M1(j)) égal au produit des facteurs F1(k), pour k allant de N1 à j.

2. Procédé selon la revendication 1, dans lequel à l'étape c1), pour une ligne j, le facteur F1(j) est déterminé comme étant la valeur du paramètre F pour laquelle la valeur de la fonctionnelle K suivante est minimale :

   $$K = \sum_{G1(j)} \left(|\, I_{A,i,j+s} - F * I_{A,i,j}\,|\right)^{p}$$

   où p est un nombre positif.

3. Procédé selon la revendication 1, dans lequel à l'étape c1), pour une ligne j, le facteur F1(j) est déterminé comme étant égal à un ratio entre l'intensité moyenne des pixels de la ligne Lj et l'intensité moyenne des pixels de la ligne Lj+s,

l'intensité moyenne des pixels d'une ligne étant une moyenne de l'intensité des pixels de la ligne.

4.  Procédé selon l'une quelconque des revendications 1 à 3, comprenant en outre les étapes suivantes :

    c2) pour chaque valeur de l'indice j dans la plage de lignes allant de N1 à N2 de l'image initiale (A), à l'aide d'au moins un ordinateur, on détermine un facteur F2(j) comme étant la valeur du paramètre F pour laquelle la valeur de la fonctionnelle K suivante est minimale :

$$K = \sum_{G2(j)} g\big(I_{A,i,j+s} - F * I_{A,i,j}\big)$$

    où G2(j) est un deuxième groupe de colonnes de la ligne j considérée ;
    g est une fonction strictement croissante, notamment une norme, et la somme est calculée pour l'ensemble des colonnes i du groupe G2(j) ; et
    d2) on calcule une deuxième image améliorée (B2) dans laquelle chaque ligne Lj de ladite plage de lignes allant de N1 à N2 est remplacée par une ligne L''j obtenue en multipliant chaque pixel de la ligne Lj par un coefficient multiplicateur (M2(j)) égal au produit des facteurs F2(k), pour k allant de j à N2; et
    e) on calcule une image améliorée moyenne (C) égale à une moyenne des première et deuxième image améliorée (B1,B2).

5.  Procédé selon l'une quelconque des revendications 1 à 4, dans lequel l'image initiale (A) est une image infra-rouge, notamment une image dans l'infra-rouge longues ondes (LWIR).

6.  Procédé selon l'une quelconque des revendications 1 à 5, comportant en outre l'étape suivante, pour au moins une ligne Lj :

    b1) pour chacun des pixels de ladite au moins une ligne Lj, on évalue un écart ($E_{A,h,j}$) entre une intensité $I_{A,h,j}$ d'un pixel d'une colonne h considérée sur la ligne Lj et une intensité $I_{A,h,j+s}$ d'un pixel correspondant dans la colonne h et sur la ligne Lj+s :

$$E_{A,h,j} = \big|\ I_{A,h,j} - I_{A,h,j+s}\ \big|$$

    ; et
    à l'étape d1), le premier groupe de colonnes (G1(j)) à prendre en compte pour la ligne Lj est déterminé comme étant l'ensemble des indices de colonne h pour lesquels l'écart $E_{A,h,j}$ est inférieur à une valeur prédéterminée.

7.  Programme d'ordinateur sur un support d'informations, ce programme étant susceptible d'être mis en œuvre dans un ordinateur, ce programme comportant des portions/moyens/instructions de code de programme pour l'exécution des étapes du procédé de traitement d'images selon l'une quelconque des revendications 1 à 6 lorsque ledit programme est exécuté sur un ordinateur.

8.  Support d'informations lisible par un ordinateur sur lequel est enregistré un programme d'ordinateur selon la revendication 7.

9.  Dispositif de traitement d'images (30), le dispositif comportant

    a) un module d'acquisition d'image initiale, configuré pour acquérir une image initiale (A) constituée de pixels ;
    c1) un module de détermination de facteur F1(j) configuré, pour chaque valeur d'un indice j dans une plage de lignes allant de N1 à N2 de l'image initiale A, pour déterminer un facteur F1(j) comme étant la valeur du paramètre F pour laquelle la valeur de la fonctionnelle K suivante est minimale :

$$K = \sum_{G1(j)} g\big(I_{A,i,j+s} - F * I_{A,i,j}\big)$$

où

G1(j) est un premier groupe de colonnes de la ligne j considérée; g est une fonction strictement croissante, notamment une norme, et la somme est calculée pour l'ensemble des colonnes i du groupe G1(j) ;

$I_{A,i,j}$ est une intensité d'un pixel de l'image initiale (A) situé sur la colonne i et la ligne j ;

$$s=+1 \text{ ou } -1$$

 ; et

d1) un module de calcul de première image améliorée, configuré pour calculer une première image améliorée dans laquelle, chaque ligne Lj de ladite plage de lignes allant de N1 à N2 est remplacée par une ligne L'j obtenue en multipliant chaque pixel de la ligne Lj par un coefficient multiplicateur (M1(j)) égal au produit des facteurs F1(k), pour k allant de N1 à j.

10. Dispositif de traitement d'images (30) selon la revendication 9, dont le module de détermination de facteur F1(j) est configuré pour obtenir le facteur F1(j) comme étant la valeur du paramètre F pour laquelle la valeur de la fonctionnelle K suivante est minimale :

$$K = \sum_{G1(j)} \left( | I_{A,i,j+s} - F * I_{A,i,j} | \right)^{p}$$

où p est un nombre positif.

11. Dispositif de traitement d'images (30) selon la revendication 9, dans lequel le module de détermination de facteur F1(j) est configuré pour déterminer le facteur F1(j) comme étant égal à un ratio entre l'intensité moyenne des pixels de la ligne Lj et l'intensité moyenne des pixels de la ligne Lj+s, l'intensité moyenne des pixels d'une ligne étant une moyenne de l'intensité des pixels de la ligne.

12. Système d'acquisition d'images (10) comprenant au moins une caméra infra-rouge (20), notamment une caméra infra-rouge (20) configurée pour acquérir des images dans la bande de fréquence LWIR, et un dispositif de traitement d'images (30) selon l'une quelconque des revendications 9 à 11.

13. Robot ou véhicule (100) comprenant un système d'acquisition d'images (10) selon la revendication 12.

**Patentansprüche**

1. Bildverarbeitungsverfahren, umfassend die folgenden Schritte:

a) Erfassen eines Ausgangsbilds (A), das aus Pixeln besteht;

c1) Bestimmen, mittels mindestens eines Rechners, für jeden Wert eines Index j in einem Zeilenbereich von N1 bis N2 des Ausgangsbilds (A), eines Faktors F1(j) als Wert des Parameters F, bei dem der Wert des folgenden Funktionals K minimal ist:

$$K = \sum_{G1(j)} g\left( I_{A,i,j+s} - F * I_{A,i,j} \right)$$

wobei

G1(j) eine erste Gruppe von Spalten in der betrachteten Zeile j ist;

g eine streng steigende Funktion ist, insbesondere eine Norm, und die Summe für alle Spalten i der Gruppe G1(j) berechnet wird;

$I_{A,i,j}$ eine Intensität eines Pixels des Ausgangsbilds (A) ist, das sich in Spalte i und Zeile j befindet;

s=+ 1 oder -1; und

d1) Berechnen eines ersten verbesserten Bilds (B1), in dem jede Zeile Lj des Bereichs von Zeilen von N1 bis N2 durch eine Zeile L'j ersetzt wird, die durch Multiplizieren jedes Pixels der Zeile Lj mit einem Multiplikationskoeffizienten (M1(j)) erlangt wird, der gleich wie das Produkt der Faktoren F1(k) ist, für k von N1 bis j.

2. Verfahren nach Anspruch 1, wobei in Schritt c1) der Faktor F1(j) für eine Zeile j als der Wert des Parameters F bestimmt wird, bei dem der Wert des folgenden Funktionals K minimal ist:

$$K = \sum_{G1(j)} \left( \mid I_{A,i,j+s} - F * I_{A,i,j} \mid \right)^{p}$$

wobei p eine positive Zahl ist.

3. Verfahren nach Anspruch 1, wobei in Schritt c1) der Faktor F1(j) für eine Zeile j als gleich wie ein Verhältnis zwischen der mittleren Pixelintensität der Zeile Lj und der mittleren Pixelintensität der Zeile Lj+s bestimmt wird, wobei die mittlere Pixelintensität einer Zeile ein Mittelwert der Pixelintensität der Zeile ist.

4. Verfahren nach einem der Ansprüche 1 bis 3, ferner umfassend die folgenden Schritte:

   c2) Bestimmen, für jeden Wert des Index j in dem Zeilenbereich von N1 bis N2 des Ausgangsbilds (A) mittels mindestens eines Computers, eines Faktors F2(j) als Wert des Parameters F, bei dem der Wert des folgenden Funktionals K minimal ist:

$$K = \sum_{G2(j)} g\left( I_{A,i,j+s} - F * I_{A,i,j} \right)$$

   wobei G2(j) eine zweite Gruppe von Spalten der betrachteten Zeile j ist;
   g eine streng steigende Funktion ist, insbesondere eine Norm, und die Summe für alle Spalten i der Gruppe G2(j) berechnet wird; und
   d2) Berechnen eines zweiten verbesserten Bilds (B2), in dem jede Zeile Lj des Bereichs von Zeilen von N1 bis N2 durch eine Zeile L"j ersetzt wird, die durch Multiplizieren jedes Pixels der Zeile Lj mit einem Multiplikationskoeffizienten (M2(j)) erlangt wird, der gleich wie das Produkt der Faktoren F2(k) ist, für k von j bis N2; und
   e) Berechnen eines mittleren verbesserten Bilds (C), das gleich wie ein Mittelwert des ersten und es zweiten verbesserten Bilds (B1, B2) ist.

5. Verfahren nach einem der Ansprüche 1 bis 4, wobei das Ausgangsbild (A) ein Infrarotbild ist, insbesondere ein Bild in langwelligem Infrarot (LWIR).

6. Verfahren nach einem der Ansprüche 1 bis 5, ferner umfassend für mindestens eine Zeile Lj den folgenden Schritt:

   b1) Bewerten, für jedes der Pixel der mindestens einen Zeile Lj, einer Abweichung ($E_{A,h,j}$) zwischen einer Intensität $I_{A,h,j}$ eines Pixels einer betrachteten Spalte h in der Zeile Lj und einer Intensität $I_{A,h,j+s}$ eines entsprechenden Pixels in der Spalte h und in der Zeile Lj+s: $E_{A,h,j} = \mid I_{A,h,j} - I_{A,h,j+s} \mid$; und
   wobei in Schritt d1) die erste Gruppe von Spalten (G1(j)), die für die Zeile Lj berücksichtigt werden soll, als die Gesamtheit der Spaltenindizes h bestimmt wird, für die die Abweichung $E_{A,h,j}$ kleiner als ein vorbestimmter Wert ist.

7. Computerprogramm auf einem Datenträger, wobei das Programm in einem Computer implementiert werden kann, wobei das Programm Programmcodeabschnitte/- einrichtungen/-anweisungen zur Ausführung der Schritte des Bildverarbeitungsverfahrens nach einem der Ansprüche 1 bis 6 umfasst, wenn das Programm auf einem Computer ausgeführt wird.

8. Computerlesbarer Datenträger, auf dem ein Computerprogramm nach Anspruch 7 gespeichert ist.

9. Bildverarbeitungsvorrichtung (30), die Vorrichtung umfassend

   a) ein Modul zum Erfassen eines Anfangsbilds, das konfiguriert ist, um ein aus Pixeln bestehendes Ausgangsbild (A) zu erfassen;
   c1) ein Faktorbestimmungsmodul F1(j), das konfiguriert ist, um für jeden Wert eines Index j in einem Zeilenbereich von N1 bis N2 des Anfangsbilds A einen Faktor F1(j) als Wert des Parameters F zu bestimmen, bei dem der Wert des folgenden Funktionals K minimal ist:

$$K = \sum_{G1(j)} g(I_{A,i,j+s} - F * I_{A,i,j})$$

wobei

G1(j) eine erste Gruppe von Spalten in der betrachteten Zeile j ist;

g eine streng steigende Funktion ist, insbesondere eine Norm, und die Summe für alle Spalten i der Gruppe G1(j) berechnet wird;

$I_{A,i,j}$ eine Intensität eines Pixels des Ausgangsbilds (A) ist, das sich in Spalte i und Zeile j befindet;

s=+ 1 oder -1; und

d1) ein Berechnungsmodul für ein erstes verbessertes Bild ist, das konfiguriert ist, um ein erstes verbessertes Bild zu berechnen, in dem jede Zeile Lj des Bereichs von Zeilen von N1 bis N2 durch eine Zeile L'j ersetzt wird, die durch Multiplizieren jedes Pixels der Zeile Lj mit einem Multiplikationskoeffizienten (M1(j)) erlangt wird, der gleich wie das Produkt der Faktoren F1(k) ist, für k von N1 bis j.

10. Bildverarbeitungsvorrichtung (30) nach Anspruch 9, deren Faktorbestimmungsmodul F1(j) konfiguriert ist, um den Faktor F1(j) als Wert des Parameters F zu erlangen, bei dem der Wert des folgenden Funktionals K minimal ist:

$$K = \sum_{G1(j)} \left( | I_{A,i,j+s} - F * I_{A,i,j} | \right)^p$$

wobei p eine positive Zahl ist.

11. Bildverarbeitungsvorrichtung (30) nach Anspruch 9, wobei das Faktorbestimmungsmodul F1(j) konfiguriert ist, um den Faktor F1(j) als gleich wie ein Verhältnis zwischen der mittleren Intensität der Pixel der Zeile Lj und der mittleren Intensität der Pixel der Zeile Lj+s zu bestimmen, wobei die mittlere Pixelintensität einer Zeile ein Mittelwert der Pixelintensität der Zeile ist.

12. Bilderfassungssystem (10), umfassend mindestens eine Infrarotkamera (20), insbesondere eine Infrarotkamera (20), die zum Erfassen von Bildern in dem LWIR-Frequenzband konfiguriert ist, und eine Bildverarbeitungsvorrichtung (30) nach einem der Ansprüche 9 bis 11.

13. Roboter oder Fahrzeug (100), umfassend ein Bilderfassungssystem (10) nach Anspruch 12.

**Claims**

1. An image processing method comprising the following steps:

a) an initial image (A) consisting of pixels is acquired;

c1) using at least one computer, for each value of an index j in a range of lines from N1 to N2 of the initial image A, a factor F1 (j) is determined as the value of the parameter F for which the following functional K is minimum:

$$K = \sum_{G1(j)} g(I_{A,i,j+s} - F * I_{A,i,j})$$

where

G1 (j) is a first group of columns of the line j considered;

g is a strictly increasing function, in particular a norm, and the sum is calculated for all columns i of group G1 (j);

$I_{A,i,j}$ is an intensity of one pixel of the initial image (A) located on column i and line j; s=+1 or -1; and

d1) a first enhanced image (B1) is calculated, wherein each line Lj of said range of lines from N1 to N2 is replaced by a line L'j obtained by multiplying each pixel of line Lj by a multiplier coefficient (M1(j)) equal to the product of the factors F1(k), for k ranging from N1 to j.

2. The method according to claim 1, wherein at step c1), for a line j, the factor F1 (j) is determined as the value of the parameter F for which the value of the following functional K is a minimum:

$$K = \sum_{G1(j)} \left( \mid I_{A,i,j+s} - F * I_{A,i,j} \mid \right)^{p}$$

where p is a positive number.

3. The method according to claim 1, wherein at step c1), for a line j, the factor F1 (j) is determined to be equal to a ratio between the average intensity of the pixels of the line Lj and the average intensity of the pixels of the line Lj+s, the average intensity of the pixels of a line being an average of the intensity of the pixels of the line.

4. The method according to any of claims 1 to 3, further comprising the following steps:

c2) for each value of the index j in the range of lines from N1 to N2 of the initial image (A), a factor F2(j) is determined by means of at least one computer as the value of the parameter F for which the value of the following functional K is a minimum:

$$K = \sum_{G2(j)} g\left( I_{A,i,j+s} - F * I_{A,i,j} \right)$$

where G2(j) is a second group of columns of the line j considered; g is a strictly increasing function, in particular a norm, and the sum is calculated for all columns i of group G2(j); and
d2) a second enhanced image (B2) is calculated, wherein each line Lj of said range of lines from N1 to N2 is replaced by a line L"j obtained by multiplying each pixel of line Lj by a multiplier coefficient (M2(j)) equal to the product of the factors F2(k), for k ranging from j to N2; and
e) an average enhanced image (C) equal to an average of the first and second enhanced images (B1, B2) is calculated.

5. The method according to any of claims 1 to 4, wherein the initial image (A) is an infrared image, in particular a long-wave infrared (LWIR) image.

6. The method according to any of claims 1 to 5, further including the following step, for at least one line Lj:

b1) for each of the pixels of said at least one line Lj, a deviation ($E_{A,h,j}$) between an intensity $I_{A,h,j}$ of a pixel of a column h considered on the line Lj and an intensity $I_{A,h,j+s}$ of a corresponding pixel in the column h and on the line Lj+s is evaluated:

$$E_{A,h,j} = \mid I_{A,h,j} - I_{A,h,j+s} \mid$$

; and
at step d1), the first group of columns (G1(j)) to be taken into account for the line Lj is determined as being the set of column indices h for which the deviation $E_{A,h,j}$ is less than a predetermined value.

7. A computer program on an information carrier, said program being executable in a computer, the program including program code portions/means/instructions for carrying out the steps of the image processing method according to any of claims 1 to 6 when said program is run on a computer.

8. A computer-readable information carrier having stored thereon, a computer program according to claim 7.

9. An image processing device (30), the device including

a) an initial image acquisition module, configured to acquire an initial image (A) consisting of pixels;
c1) a factor-determining module F1(j) configured, for each value of an index j in a range of lines from N1 to N2 of the initial image A, to determine a factor F1(j) as the value of the parameter F for which the value of the following functional K is a minimum:

$$K = \sum_{G1(j)} g(I_{A,i,j+s} - F * I_{A,i,j})$$

where

G1(j) is a first group of columns of the line j considered;

g is a strictly increasing function, in particular a norm, and the sum is calculated for all columns i of group G1 (j);

$I_{A,i,j}$ is an intensity of one pixel of the initial image (A) located on column i and line j; s=+1 or -1; and

d1) a first enhanced image calculation module, configured to calculate a first enhanced image wherein, each line Lj of said range of lines from N1 to N2 is replaced by a line L'$_j$ obtained by multiplying each pixel of line Lj by a multiplier coefficient (M1(j)) equal to the product of the factors F1(k), for k ranging from N1 to j.

10. The image processing device (30) according to claim 9, wherein the factor F1(j) determining module is configured to obtain the factor F1 (j) as the value of the parameter F for which the value of the following functional K is a minimum:

$$K = \sum_{G1(j)} \left( | I_{A,i,j+s} - F * I_{A,i,j} | \right)^{p}$$

where p is a positive number.

11. The image processing device (30) according to claim 9, wherein the factor F1(j) determining module is configured to determine the factor F1 (j) as being equal to a ratio between the average pixel intensity of the line Lj and the average pixel intensity of the line Lj +s, the average pixel intensity of a line being an average of the pixel intensity of the line.

12. An image acquisition system (10) comprising at least one infrared camera (20), in particular an infrared camera (20) configured to acquire images in the LWIR frequency band, and an image processing device (30) according to any of claims 9 to 11.

13. A robot or vehicle (100) comprising an image acquisition system (10) according to claim 12.

[Fig. 1]

[Fig. 2]

[Fig. 3]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CN 1946143
- US 2015371373 A
- CN 105512623